# EUROPÄISCHE PATENTSCHRIFT

(11) **EP 2 783 612 B1**
(45) Veröffentlichungstag und Bekanntmachung des Hinweises auf die Patenterteilung: **06.11.2019**
(21) Anmeldenummer: 14160668.1
(22) Anmeldetag: 19.03.2014
(51) Int. Cl.: A47J 43/046

(54) **Bearbeitungsaufsatz mit Haltemittel und Bearbeitungswerkzeug**
Processing attachment with holding device and processing tool
Embout de traitement doté de moyen de retenue et outil de traitement

(30) Priorität: 28.03.2013 DE 102013205546
(43) Veröffentlichungstag der Anmeldung: 01.10.2014
(73) Patentinhaber: BSH Hausgeräte GmbH, 81739 München (DE)
(72) Erfinder: Pesec, Jurij, 3301 Petrovce, Slowenien (SI); Sabec, Roman, 3327 Smartno (SI)

(56) Entgegenhaltungen:
- CH-A- 294 941
- DE-C- 837 452
- DE-C1- 4 424 501
- US-A- 2 804 289
- US-A- 4 609 156

## Beschreibung

### Gebiet der Erfindung

Die Erfindung betrifft einen Bearbeitungsaufsatz zur Nahrungsmittelbearbeitung für die Verwendung mit einer Küchenmaschine nach Anspruch 1 und eine Küchenmaschine mit einem Bearbeitungsaufsatz gemäß Anspruch 9.

### Hintergrund der Erfindung

Die deutsche Patentschrift DE 44 24 501 C1 lehrt einen Handmixer, beispielsweise einen Stabmixer mit einem wechselbaren Werkzeugschaft und einem Motorteil. Eine Kupplung bewirkt eine formschlüssige Drehverbindung zwischen der Werkzeugwelle und einer Antriebswelle des Motorteils. Am Werkzeugschaft ist eine Befestigungsnut zum Eingreifen einer Spreizklammer des Motorteils bekannt. Die Befestigungsnut kann umlaufend ausgebildet sein, sie kann auch mehrere Befestigungsnutabschnitte an den Stellen des Umfangs des Werkzeugschafts aufweisen, in denen die Spreizklammer eingreift. Zum Lösen des Werkzeugschafts vom Motorteil sind zwei Druckknöpfe vorgesehen, mittels derer die Spreizklammer so gespreizt werden kann, dass sie aus der Befestigungsnut freikommt. Die Druckknöpfe sind einander gegenüberliegend am Motorteil angeordnet. Der Werkzeugschaft kann vom Motorteil abgenommen werden.

Die deutsche Offenlegungsschrift DE 197 29 446 A1 zeigt und beschreibt ein Arbeitsgerät zum Rühren oder Zerkleinern von Nahrungsmitteln. Eine Arbeitswelle, die an ihrem abtriebsseitigen Ende ein Messer trägt, ist in einer Lagerhülse geführt, die ihrerseits in ein Trageteil eingesetzt ist. Die Lagerhülse ist gegen ein axiales Verschieben an der Arbeitswelle durch einen unteren Sicherungsring, der sich in eine Nut der Arbeitswelle einlegt, und durch einen oberen Sicherungsring, der entsprechend in eine Nut der Arbeitswelle aufgeklemmt ist, die sich jeweils an die untere und die obere Stirnseite der Lagerhülse anlegen, gesichert.

Aus der Offenlegungsschrift DE 10 2009 006 041 A1 ist eine elektromotorisch betätigte Küchenmaschine bekannt. Das Gehäuse der Küchenmaschine weist eine Rührtopfaufnahme für einen abnehmbaren und gegebenenfalls beheizbaren Rührtopf auf. Letztere ist mit einem Rührwerk in Form eines Messerwerks versehen, welches über eine Kupplung, bei der der in der Rührtopfaufnahme aufgenommene Rührtopf mit einen über den Drehzahlsteller regelbaren, in dem Gehäuse der Küchenmaschine aufgenommenen Elektromotor in Verbindung steht. Die senkrecht zum Topfboden ausgerichtete Rührwerkachse durchsetzt den Topfboden mittig, eine Festlegung des Rührwerks an dem Topfboden erfolgt mittels Verspannung.

Aus der europäischen Patentanmeldung EP 1 262 131 A1 ist ein Befestigungsmechanismus für eine Küchenmaschine bekannt. In einer der Ausführungsformen ist ein Mischelement vorgesehen, das schnell und einfach an den Ausgabeschaft einer Küchenmaschine angeschlossen und wieder von ihr entfernt werden kann. Ein axialer Kuppelmechanismus ist axial beabstandet von einem Drehkraftübertragungsmechanismus. Wenn dabei ein Kolben in einer Vertiefung eingreift, wird das Mischelement axial an den Ausgabeschaft angekoppelt.

CH 294941 offenbart eine handbetriebe Küchenmaschine zum gegenläufigen Antreiben von Bearbeitungswirkmitteln vermittels einer Hohlwelle und einer in diese eingesteckten, drehbaren Innenwelle. Ein Messerkopf kann in eine auf der Hohlwelle aufsitzende Kupplungsbüchse eingesteckt werden und mittels eines Bolzens, der durch die Kupplungsbüchse und die Hohlwelle hindurchgeführt ist, arretiert werden. US 2,804,289 offenbart eine Küchenmaschine mit einem Behälter, in dem ein Schaft rotierbar gelagert ist, an dessen einem Ende eine rechteckige Ausnahme als Kupplung für einen Motorschaft vorgesehen ist, und an dessen anderem Ende ein Gewinde vorgesehen ist, über das Schneidmesser im Inneren des Behälters mit einer Mutter arretiert werden können. US 4,609,156 offenbart eine Vorrichtung zur Bearbeitung von Nahrungsmitteln, bei der ein rotierendes Schneidwerkzeug mit daran befestigten Schneidmessern durch elastische Haltefinger in einem Lager einer Schüssel der Vorrichtung gegen ein in Bezug auf die Rotationsachse axiales Herausrutschen gesichert ist. Die deutsche Patentschrift 837 452 offenbart einen Aufsatz für ein Staubsaugergehäuse, mit dem Nahrungsmittel bearbeitet werden können. Dabei treibt eine Welle eines Staubsaugermotors eine Messerwelle an, auf der Messer durch ein Gewinde der Messerwelle und eine Mutter arretiert sind, wobei der Antrieb der Messerwelle seitens des Staubsaugers durch eine staubsaugerseitige Mitnehmergabel erfolgt, die in seitlich an der Messerwelle angeordnete Schrauben und Gummiringe eingreift.

### Der Erfindung zugrundeliegende Aufgabe

Der Erfindung liegt die Aufgabe zugrunde, einen Bearbeitungsaufsatz zu schaffen, der gegenüber dem Stand der Technik verbessert ist. Insbesondere soll durch die Erfindung erreicht werden, dass das Ankoppeln eines Bearbeitungswerkzeugs an einen Bearbeitungsaufsatz für eine Küchenmaschine vereinfacht werden kann. Beispielsweise soll erreicht sein, dass das Ankoppeln bequemer, zuverlässiger, sauberer oder auch stabiler erfolgen kann. Zudem soll beispielsweise erreicht werden, dass Kupplungselemente bei einem Defekt vereinfacht ausgetauscht werden können, ohne dass die gesamte Küchenmaschine in Reparatur gegeben werden muss.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrunde liegende Aufgabe wird gelöst durch einen Bearbeitungsaufsatz nach Anspruch 1 und eine Küchenmaschine nach Anspruch 9.

Ein Bearbeitungsaufsatz im Sinne der Erfindung ist ein Zubehörteil für eine Küchenmaschine, das mit der Küchenmaschine abhängig vom gewünschten Nahrungsmittelbearbeitungszweck verbunden werden kann. Die Küchenmaschine stellt zu diesem Zweck mittels eines Antriebs eine Bearbeitungskraft zur Verfügung, die über eine rotierbare Antriebsgegenkupplung von dem Bearbeitungsaufsatz entgegen genommen wird. An den Bearbeitungsaufsatz sind wiederum ein oder mehrere Bearbeitungswerkzeuge ankuppelbar oder untrennbar mit diesem verbunden, die mittels der Antriebskraft, die von der Küchenmaschine mittelbar an die Bearbeitungswerkzeuge weiter gegeben wird, angetrieben werden können. Im Sinne der Erfindung ist ein Bearbeitungsaufsatz ein Bechergefäß. Auch ein austauschbares Gehäuseteil mit einem Werkzeug für einen Stabmixer ist im Sinne der Erfindung ein Bearbeitungsaufsatz.

Bearbeitungswerkzeuge sind im Sinne der Erfindung solche Anbauteile, die an einem Bearbeitungsaufsatz angeordnet sind oder lösbar damit verbunden werden können und durch eine Kraft, die von einer Küchenmaschine auf den Bearbeitungsaufsatz übertragen wird, angetrieben werden können, um damit Nahrungsmittel zu bearbeiten. Entsprechende Bearbeitungswerkzeuge sind Hackwerkzeuge, Schneidwerkzeuge, Pürierwerkzeuge, Rührwerkzeuge, Raspelwerkzeuge und vergleichbare, dem Fachmann aus dem Alltag bekannte Werkzeuge für Nahrungsmittelbearbeitung, die an Bearbeitungsaufsätzen für Küchenmaschinen zum Einsatz kommen.

Im Sinne der Erfindung sind Bearbeitungswirkmittel die Elemente, die an dem Bearbeitungswerkzeug lösbar oder unlösbar angebracht sind, und die Kraft, die von der Küchenmaschine bereitgestellt wird, dafür einsetzen, dass Nahrungsmittel unmittelbar zu bearbeiten. Solche Bearbeitungswirkmittel sind Messer, Rührbesenschlaufen, Knethaken, Lochscheiben, Raspelbleche und alle weiteren Bearbeitungswirkmittel, die dem Durchschnittsfachmann als Bearbeitungswirkmittel an Bearbeitungswerkzeugen für Bearbeitungsaufsätze für Küchenmaschinen bekannt sind.

Im Sinne der Erfindung ist eine Küchenmaschine eine Handküchenmaschine. Solche Handküchenmaschinen sind Stabmixer, Pürierstäbe oder auch Handmixer. Im Sinne der Erfindung sind Küchenmaschinen jedoch auch Standküchenmaschinen. Ein Multifunktionsküchengerät, ein Entsafter oder eine Teigknetmaschine sind Standküchenmaschinen.

Ein erreichbarer Vorteil der Erfindung ist, dass Zubehörsysteme bestehend aus unterschiedlichen Bearbeitungsaufsätzen und unterschiedlichen Bearbeitungswerkzeugen bereitgestellt werden können, deren Kupplungen jeweils so gestaltet sind, dass nur bestimmte Bearbeitungsaufsätze mit bestimmten Bearbeitungswerkzeugen kombinierbar sind. Zudem kann das Koppeln durch ein Haltemittel, das an dem Bearbeitungsaufsatz angeordnet ist, manuell einfacher handhabbar sein. Außerdem muss bei einem Defekt des Haltemittels nicht die verhältnismäßig teure Küchenmaschine mit dem Motorteil in Reparatur gegeben werden, wenn das Haltemittel und gegebenenfalls auch entsprechende Handhaben für das Haltemittel bearbeitungsaufsatzseitig angeordnet sind, was die Benutzerfreundlichkeit einer Küchenmaschine erhöhen kann. Zudem können Haltemittel und Kraftübertragungsabschnitt der Kupplung voneinander getrennt ausgeführt sein, sodass beispielsweise durch das Haltemittel eine stabile axiale Verrutschsicherung bereitgestellt werden kann und durch den Kraftübertragungsabschnitt eine davon unabhängige rotatorische Ankupplung an die Abtriebskopplung des Bearbeitungsaufsatzes verfügbar ist. Vorteil kann dann sein, dass im Gegensatz zu einheitlichen Lösungen kein Kompromiss zwischen einer guten axialen Rutschsicherung und einer drehfest ausgestalteten Kupplung gefunden werden muss, der bei einer gemeinsamen Ausführung von axialer Fixierung und Drehmitnahme in Rotationsrichtung notwendig sein kann.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Bevorzugt ist, dass der Bearbeitungsaufsatz ein Bechergefäß ist. Bechergefäße sind besonders vorteilhafte Aufsätze zur Nahrungsmittelbearbeitung und können von einem verbesserten Haltemittel besonders profitieren. In Bechergefäßen besteht beispielsweise manchmal das Problem, dass ein Bearbeitungswerkzeug nicht für alle Arten der Nahrungsmittelbearbeitung geeignet ist. So will man beispielsweise ein Hackmesser gegen einen Rührbesen austauschen können, wenn dies erforderlich ist. Allerdings kann der Sitz des Bearbeitungswerkzeugs, beispielsweise in einer reibschlüssigen Kupplung, manchmal so fest sein, insbesondere nachdem ein Nahrungsmittel bearbeitet worden ist, dass das Werkzeug kaum von dem Bechergefäß lösbar ist. Auch kann das Bearbeitungswerkzeug durch Nahrungsmittel verschmutzt sein, weshalb es für den Benutzer unangenehm sein kann, in direkten Kontakt mit dem Bearbeitungswerkzeug kommen zu müssen, um es vom Bearbeitungsaufsatz zu lösen. Durch ein manuell betätigbares Haltemittel kann ein sicherer Sitz des Bearbeitungswerkzeugs erreicht werden und trotzdem eine gute Lösbarkeit erreichbar sein. Alternativ kann der Bearbeitungsaufsatz anstelle eines Bechergefäßes auch ein Vorsatz für einen Stabmixer sein oder beispielsweise eine durch eine Küchenmaschine betreibbare Saftpresse. Besonders bevorzugt ist, dass das Bechergefäß ein Bechergefäß für eine Multifunktionsküchenmaschine ist.

In einer bevorzugten Ausführungsform ist die Küchenmaschine eine Standküchenmaschine. Dies kann eine besonders vorteilhafte Anwendung eines erfindungsgemäßen Bearbeitungsaufsatzes mit einem Haltemittel sein. Standküchenmaschinen haben oft Bearbeitungsaufsätze, die mit einer Antriebsgegenkupplung eines Bearbeitungsaufsatzes verbindbar sind, um eine Motorleistung eines Motors, der in der Standküchenmaschine angeordnet ist, auf Bearbeitungswerkzeuge am Bearbeitungsaufsatz zu übertragen. Da für solche Standküchenmaschinen eine Vielzahl von verschiedenen Bearbeitungsaufsätzen mit austauschbaren Bearbeitungswerkzeugen bekannt sind, ist es von besonderem Vorteil, gerade Standküchenmaschinen mit einem erfindungsgemäßen Bearbeitungsaufsatz zu verwenden und zu verbessern. Bevorzugte Standküchenmaschinen sind dementsprechend Multifunktionsküchenmaschinen. Andere bevorzugte Standküchenmaschinen sind beispielsweise Standmixer oder Rührgeräte, beispielsweise zum Teigrühren und -kneten, allgemeine Standküchenmaschine beispielsweise nach Art einer dem Fachmann als Küchenfee bekannten Ausführungsform. Alternativ ist aber auch möglich, Stabmixer, Pürierstäbe, Handmixer oder ganz allgemein Handküchenmaschinen mit einem solchen Bearbeitungsaufsatz zu verwenden. Häufig können auch solche Handküchenmaschinen eingesetzt werden, um an geeigneten Bearbeitungsaufsätzen, beispielsweise Bechergefäßen, angeordnete Bearbeitungswerkzeuge zur Nahrungsmittelbearbeitung mit einem Motor anzutreiben. Wichtig ist dabei in dieser Hinsicht nur, dass durch die Küchenmaschine ein Antrieb bereitgestellt wird, dessen Leistung mittelbar auf die Bearbeitungswerkzeuge übertragen werden kann.

Vorzugsweise ist das Haltemittel in die Haltestellung vorgespannt. Bevorzugt ist, dass durch manuelles Betätigen in die Freigabestellung bewegbar ist. Anders ausgedrückt bedeutet dies, dass sich das Haltemittel ohne manuelles Betätigen durch den Benutzer in der Haltestellung befindet. Ein bevorzugtes Haltemittel ist ein elastisches Element. Entsprechend ist das elastische Element in die Haltestellung vorgespannt. Es kann vorzugsweise durch manuelles Betätigen von der Haltestellung in die Freigabestellung bewegt werden. So kann ein sicherer Halt des Bearbeitungswerkzeugs sichergestellt werden, das nach manuellem Betätigen des Haltemittels vom Bearbeitungsaufsatz gelöst werden kann.

Ein besonders bevorzugtes Haltemittel ist ein Federelement, besonders bevorzugt ein Federelement aus einem gebogenen Draht. Ein besonders bevorzugtes Federelement besteht aus einem einzigen Draht, der zwei im Wesentlichen ringförmige Bereiche, also einen ersten und einen zweiten ringförmigen Bereich aufweist, die benachbart und miteinander verbunden sind. Bevorzugt enden beide Drahtenden des gebogenen Drahtes unmittelbar neben dem zweiten ringförmigen Bereich. Vorzugsweise ergibt sich damit ein in einer Aufsicht lemniskatenartig gestaltes, flaches Federelement aus Draht mit jeweils zwei ringförmigen Bereichen, wobei der Draht zwei freie Enden hat, die unmittelbar an eine der beiden ringförmigen Bereiche anschließen. Bevorzugt liegt das gesamte Federelement vollständig in einer einzigen Raumebene, ist also eben ausgeführt. Vorzugsweise fällt der Flächennormalenvektor der Öffnung des zweiten ringförmigen Bereichs, der den offenden Enden des Drahtes benachbart ist, mit dem Flächennormalenvektor der Abtriebskupplung zusammen. Eine imaginäre Linie, die senkrecht durch die Mitte des besagten ringförmigen Bereichs verläuft, verläuft dann also auch senkrecht durch die Mitte der Abtriebskupplung. So kann der zweite ringförmige Bereich radial eine Abtriebsachse eines Bearbeitungswerkzeugs umgeben, wenn die Abtriebsachse durch den zweiten ringförmigen Bereich des Haltemittels hindurch mit der Abtriebskupplung verbunden wird. Ein bevorzugtes Haltemittel ist aus Metall gefertigt, vorzugsweise aus Federstahl. Es kann aber auch beispielsweise aus einem Kunststoff gefertigt sein.

Es ist bevorzugt, dass das Haltemittel eine oder mehrere Handhaben aufweist, um das Haltemittel manuell von der Haltestellung in die Freigabestellung verlagern zu können. Handhaben können das manuelle Betätigen des Haltemittels besonders einfach gestalten. Der Benutzer muss nicht unmittelbar das Haltemittel, beispielsweise eine Feder, betätigen, sondern kann mittelbar über eine oder mehrere Handhaben eine Kraft auf das Haltemittel übertragen, um es in die Freigabestellung bringen zu können. Das kann den Vorteil haben, dass das Haltemittel und die Handhaben völlig unterschiedliche Bauteile sein können, die voneinander beabstandet sein können und über einen Kraftübertragungspfad miteinander wirkverbunden sind. Entsprechend können Haltemittel und Handhaben auch aus unterschiedlichen Materialien hergestellt sein. Beispielsweise kann die Handhabe aus Kunststoff sein. So kann eine besonders preisgünstige Handhabe bereitgestellt werden. Alternativ kann die Handhabe aber auch aus Metall sein. Bevorzugt ist genau eine Handhabe vorhanden. Dann kann ein einfaches Betätigen mittels beispielsweise des Daumens des Benutzers ermöglicht sein. Alternativ können aber auch zwei oder mehr Handhaben vorhanden sein. Dann sind bevorzugt zwei Handhaben vorhanden, die sich in einer Ebene gegenüber liegen. So kann vorzugsweise auf einfache Weise ein besonders guter Kraftübertrag zwischen Handhabe und Haltemittel erreicht werden, was die Benutzerfreundlichkeit steigern kann. Eine bevorzugte Handhabe ist in einer Aufsicht im Wesentlichen u-förmig geformt und als flaches, kartenartiges Bauteil ausgeführt. Vorzugsweise ist an dem Abschnitt der Handhabe, der die beiden Schenkel des Us miteinander verbindet, ein Vorsprung ausgearbeitet, der mit dem Haltemittel interagieren kann. Eine derart u-förmige und flache Ausführung kann leicht herzustellen, beispielsweise auszustanzen sein.

Vorzugsweise kann das Haltemittel durch eine Translationsbewegung der einen oder der mehreren Handhaben, die im Wesentlichen senkrecht zur Rotationsachse der Abtriebskupplung erfolgt, in die Freigabestellung bewegt werden. Dadurch können dann mit dem Bearbeitungsaufsatz verbundene Bearbeitungswerkzeuge bezogen auf den Bearbeitungsaufsatz freigeben werden. Auf diese Weise kann eine besonders natürliche und dem Benutzer von anderen Haltemitteln grundsätzlich bekannte Bewegungsfolge eingesetzt werden, um ein verbessertes Haltemittel an einem Bearbeitungsaufsatz für eine Küchenmaschine bereitstellen zu können. Der Benutzer kann die Handhabe senkrecht zur Rotationsachse der Abtriebskupplung translatieren, wodurch das Haltemittel in die Freigabestellung bewegt wird. Dann kann der Benutzer vorzugsweise das Bearbeitungswerkzeug parallel zur Rotationsachse der Abtriebskupplung aus der Abtriebskupplung abziehen und so von dem Bearbeitungsaufsatz entfernen. So kann eine sehr benutzerfreundliche Lösung umgesetzt werden, die nur solche Bewegungsabläufe umfasst, die den meisten Benutzern vertraut sind und daher leicht von der Hand gehen.

Bevorzugt ist, dass die mindestens eine Handhabe in einem Abschnitt des Bearbeitungsaufsatzes angeordnet ist, der von einem Abschnitt des Bearbeitungsaufsatz, in dem Nahrungsmittel mit den Bearbeitungswerkzeugen bearbeitet werden können, räumlich getrennt ist. Auf diese Weise kann ein besonders bequemes Betätigen der Handhabe erreicht werden. Der Benutzer muss die Handhabe nicht im möglicherweise verschmutzten Abschnitt des Bearbeitungsaufsatzes, in dem Nahrungsmittel bearbeitet werden, auffinden und betätigen, sondern kann dies in einem separaten Abschnitt tun, der nicht mit Nahrungsmittel in Kontakt kommt. Bevorzugt trennt eine Wand die beiden Abschnitte. Besonders bevorzugt ist in der Wand eine Öffnung vorgesehen, die von einer Abtriebsachse eines Bearbeitungswerkzeugs durchstoßen werden kann, um das Bearbeitungswerkzeug mit der Abtriebskupplung verbinden zu können. Besonders bevorzugt befindet sich der Abschnitt, in dem sich die Handhabe befindet, in der Betriebsposition des Bearbeitungsaufsatzes unterhalb des Abschnitts, in dem Nahrungsmittel bearbeitet werden.

Vorzugsweise sind die Abtriebskupplung, die Antriebsgegenkupplung, die Handhabe und das Haltemittel gemeinsam in einem Abschnitt des Bearbeitungsaufsatzes angeordnet, der von dem Abschnitt, in dem Nahrungsmittel mit dem Bearbeitungswerkzeug bearbeitet werden können, räumlich getrennt ist. So können alle diese beweglichen Elemente wirksam vor einer Verunreinigung geschützt werden. Bei einem bevorzugten Bearbeitungsaufsatz ist an der Antriebsgegenkupplung eine Kupplungsöffnung vorgesehen, die als Abtriebskupplung dient. Dies ist eine einfache Lösung, eine Abtriebskupplung bereitzustellen. Antriebsgegenkupplung und Abtriebskupplung bilden dann ein gemeinsames Bauteil, sodass Produktionskosten gesenkt werden können. Zudem ist auf diese Weise eine sichere drehfeste Verbindung zwischen Antriebsgegenkupplung und Abtriebskupplung sichergestellt. Vorzugsweise kann auf diese Weise eine 1:1 Drehzahlübertragung zwischen Antriebsgegenkupplung und Bearbeitungswerkzeug erreicht werden. Eine bevorzugte Kupplungsöffnung hat in einer Blickrichtung entlang der Rotationsachse der Antriebsgegenkupplung einen Querschnitt in Form eines beschnittenen Kreises. Besonders bevorzugt ist der Kreis doppelt beschnitten. Andere mögliche Querschnittsformen sind oval, drei-, vier-, fünf-, sechs- oder achteckig. So kann die Abtriebskupplung eine verbesserte, sichere Drehmitnahme gewährleisten. Die Antriebsgegenkupplung und die Abtriebskupplung können aber auch zwei-, oder mehr teilig ausgeführt sein. Beispielsweise können sie unter Zwischenschaltung eines Getriebes wirkverbunden sein, bevorzugt über ein Übersetzungsgetriebe oder über ein Untersetzungsgetriebe. So kann die Drehzahl der Abtriebskupplung gegenüber der Drehzahl der Antriebsgegenkupplung erhöht oder vermindert sein, was entweder eine relativ zur Drehzahl der Antriebsgegenkupplung höhere Umdrehungszahl oder aber eine größere Wirkkraft hervorrufen kann. Besonders bevorzugt ist allerdings, dass die Kupplungsöffnung der Abtriebskupplung in einer Metallplatte ausgeführt ist, die in die Antriebsgegenkupplung eingelassen ist. Die Metallplatte kann einen verbesserten, stabileren seitlichen Halt in Rotationsrichtung des Bearbeitungswerkzeuges hervorrufen.

Bei einem Bearbeitungswerkzeug ist die Nut auf einem Abschnitt der Abtriebsachse des Bearbeitungswerkzeuges angeordnet ist, der zwischen den Bearbeitungswirkmitteln und der Abtriebsgegenkupplung liegt. So kann die Abtriebsgegenkupplung beispielsweise an einem Ende der Abtriebsachse angeordnet sein und die Nut näher an den Bearbeitungswerkzeugen, die am anderen Ende der Abtriebsachse angeordnet sind, liegen. Eine bevorzugte Nut liegt auf der Umfangslinie der Abtriebsachse. Vorzugsweise dringt die Nut im Wesentlichen halbkreisförmig in die Mantelfläche der Abtriebsachse ein. Alternativ kann sie beispielsweise auch rechteckig oder keilförmig eindringen. Bevorzugt dringt sie auf ihrer ganzen Länge gleich tief in die Abtriebsachse ein. Alternativ kann sie abschnittsweise auch tiefer eindringen als in anderen Längenbereichen. Eine besonders bevorzugte Nut dringt in die Mantelfläche in eine Tiefe vor, die eine Tiefe von 5 % des Radius der Abtriebsachse nicht überschreitet. Bevorzugt überschreitet sie nicht eine Tiefe von 10 %, 20 %, 35 % oder 50 % des Radius der Abtriebsachse.

Vorzugsweise umgibt die Nut eine Umfangslinie der Abtriebsachse vollständig. So kann erreicht werden, dass in jeder radialen Richtung eine gleichmäßig gute Nuthaltewirkung bereitgestellt werden kann. Bevorzugt ist dabei, dass die Nut senkrecht, bezogen auf die Rotationsachse der Abtriebsachse, die Umfangslinie der Abtriebsachse vollständig umgibt.

Bei demBearbeitungswerkzeug ist die Abtriebsgegenkupplung zudem so gestaltet, dass sie durch Formschluss in Drehung um ihre eigene Achse versetzbar ist. Ein Formschluss stellt eine besonders günstige Art der drehfesten Verbindung dar. Entsprechend ist bevorzugt, dass die Abtriebsgegenkupplung die gleiche Form aufweist, wie die Abtriebskupplung des Bearbeitungsaufsatzes, über die das Bearbeitungswerkzeug in Rotation versetzt werden soll. Dabei sind Querschnittsformen der Abtriebsgegenkupplung besonders geeignet, die einen Schlupf zwischen Abtriebsgegenkupplung und Abtriebskupplung vermeiden können. Besonders bevorzugt sind eckige Querschnittsformen, beispielsweise eine drei- bis achteckige Querschnittsform. Auch eine ovale Querschnittsform ist möglich. Bevorzugt ist die Abtriebsgegenkupplung an einem Endabschnitt der Abtriebsachse ausgebildet, der den Bearbeitungswirkmitteln fern liegt.

Ein Endabschnitt der Abtriebsachse kann in einer Blickrichtung parallel zur Abtriebsachse des Bearbeitungswerkzeuges die Querschnittsform eines beschnittenen Kreises auf und bildet so die Abtriebsgegenkupplung. Besonders bevorzugt ist eine Querschnittsform eines doppelt beschnittenen Kreises. Bevorzugt ist der Kreis derart doppelt beschnitten, dass die Beschneidung zwei gegenüberliegende parallele Flächen an der Umfangslinie der Abtriebsachse erzeugt. Solch eine Form ermöglicht einen stabilen Halt in einer entsprechend ausgeformten Abtriebskupplung einer Küchenmaschine. Durch das Anordnen der Abtriebsgegenkupplung am Endabschnitt der Abtriebsachse kann eine einfache Kupplung mit der Abtriebskupplung durch eine Steckverbindung erreicht werden. Die Steckverbindung kann axial sehr leichtgängig sein, da die axiale Fixierung durch das Haltemittel bewirkt wird, was in die Nut der Abtriebsachse eingreifen kann. So können einerseits eine besonders günstige Art der Stabilisierung in der Rotationsrichtung und andererseits eine besonders günstige Art der Stabilisierung in axialer Richtung getrennt voneinander erreichbar sein.

### Kurzbeschreibung der Zeichnungen

Weitere vorteilhafte Ausgestaltungen werden nachfolgend anhand der in den Zeichnungen dargestellten Ausführungsbeispiele, auf welche die Erfindung jedoch nicht beschränkt ist, näher beschrieben.

Es zeigen schematisch:
Figur 1 eine seitliche Querschnittsansicht durch einen erfindungsgemäßen Bearbeitungsaufsatz;
Figur 2 eine perspektivische Aufsicht auf ein erfindungsgemäßes Bearbeitungswerkzeug in einer Abtriebskupplung eines erfindungsgemäßen Bearbeitungsaufsatzes;
Figur 3 eine seitliche Perspektivansicht eines Bearbeitungswerkzeugs;
Figur 4 eine Aufsicht auf Elemente eines manuell betätigbaren Haltemittels im Bereich der Abtriebskupplung eines erfindungsgemäßen Bearbeitungsaufsatzes;
Figur 5 eine Aufsicht aus einer anderen Perspektive auf Elemente eines manuell betätigbaren Haltemittels im Bereich der Abtriebskupplung eines erfindungsgemäßen Bearbeitungsaufsatzes; und
Figur 6 eine Aufsicht auf eine Antriebsgegenkupplung eines erfindungsgemäßen Bearbeitungsaufsatzes.

### Detaillierte Beschreibung von Ausführungen der Erfindung

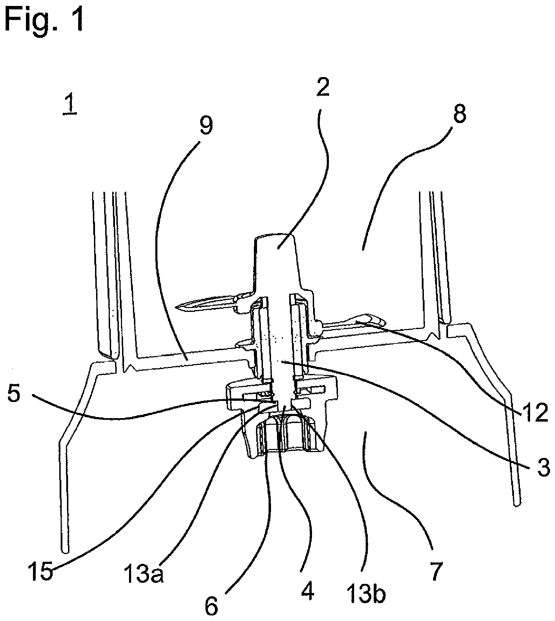

Die Figuren 1 bis 6 zeigen Ausführungsformen eines erfindungsgemäßen Bearbeitungsaufsatzes 1 und eines erfindungsgemäßen Bearbeitungswerkzeugs 2, beziehungsweise solche Elemente, die für diese von besonderer Bedeutung sein können.

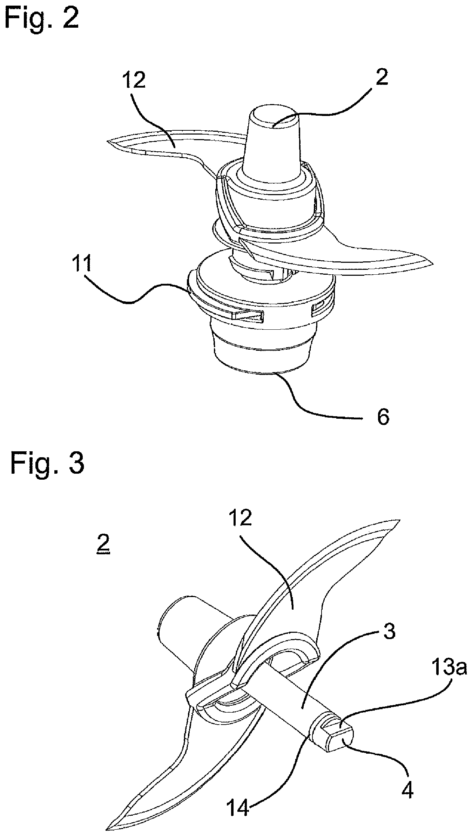

In Figur 1 ist ein erfindungsgemäßer Bearbeitungsaufsatz 1 und ein erfindungsgemäßes Bearbeitungswerkzeug 2 in einem seitlichen Querschnitt dargestellt. Im vorliegenden Beispiel ist der Bearbeitungsaufsatz 1 ein Bechergefäß für eine Standküchenmaschine (nicht gezeigt), genauer gesagt für ein Multifunktionsküchengerät. Das dargestellte Bearbeitungswerkzeug 2 ist ein Schneidmesserwerkzeug zum Zerkleinern von Nahrungsmitteln. Es ist zu diesem Zweck lösbar mit dem Bearbeitungsaufsatz 1 verbunden. Um dies zu ermöglichen, hat das Bearbeitungswerkzeug 2 eine Abtriebsachse 3 mit einer Abtriebsgegenkupplung 4, die in Figur 1 und 2 mit einer Abtriebskupplung 5 des Bearbeitungsaufsatzes 1 verbunden ist. Über die Abtriebskupplung 5 kann eine Antriebskraft auf das Bearbeitungswerkzeug 2 übertragen werden, die wiederum über eine Antriebsgegenkupplung 6 des Bearbeitungsaufsatzes 1 von einer Antriebskupplung (nicht gezeigt) der Küchenmaschine auf die Abtriebskupplung 5 des Bearbeitungsaufsatzes 1 übertragbar ist. Die Abtriebskupplung 5 und die Antriebsgegenkupplung 6 sind, wie später im Detail noch erläutert wird, im vorliegenden Fall als ein gemeinsames Bauteil ausgeführt.

Um ein Verschmutzen durch zu bearbeitende Nahrungsmittel verhindern zu können, sind die Abtriebskupplung 5 und die Antriebsgegenkupplung 6 gemeinsam in einem Kupplungsinnenraum 7 des Bearbeitungsaufsatzes 1 angeordnet, der von einem Abschnitt, in dem Nahrungsmittel bearbeitet werden können, also einem Bearbeitungsinnenraum 8, räumlich getrennt, nämlich durch eine Trennwand 9. Die Abtriebskupplung 5 umfasst ein manuell betätigbares Haltemittel 10, das zwischen einer Haltestellung und einer Freigabestellung bewegbar ist, um das über die Abtriebskupplung 5 mit dem Bearbeitungsaufsatz 1 lösbar verbindbare Bearbeitungswerkzeug 2 gegenüber dem Bearbeitungsaufsatz 1 entweder freigeben oder arretieren zu können, und eine Handhabe 11, die mit dem Haltemittel 10 wirkverbunden ist, um das Haltemittel zwischen der Haltestellung un der Freigabestellung bewegen zu können. Somit sind auch das Haltemittel 10 und die Handhabe 11 gemeinsam mit der Abtriebskupplung 5 und der Antriebsgegenkupplung 6 vom Bearbeitungsinnenraum 8 räumlich getrennt im Kupplungsinnenraum 7 angeordnet.

Figur 2 zeigt als selektiven Ausschnitt eines erfindungsgemäßen Bearbeitungsaufsatzes 1 nur das Bearbeitungswerkzeug 2 mit Bearbeitungswirkmitteln 12, in diesem Fall Messerklingen, und die Abtriebskupplung 5, die gemeinsam mit der Antriebsgegenkupplung 6 ausgeführt ist. Die Handhabe 11 zum manuellen Betätigen des Haltemittels 10 ist so eingerichtet, dass das Haltemittel 10 durch eine Translationsbewegung der Handhabe 11, die im Wesentlichen senkrecht zur Rotationsachse der Abtriebskupplung 5 erfolgt, von der Haltestellung, in die es vorgespannt ist, in die Freigabestellung bewegt werden kann. Das bedeutet, dass der Benutzer die Handhabe 11 senkrecht zur Rotationsachse der Abtriebskupplung 5 entgegen der Vorspannung verlagern kann und dadurch ermöglicht wird, das Bearbeitungswerkzeug 2 entlang der Rotationsachse von der Abtriebskupplung 5 und somit vom Bearbeitungsaufsatz 1 zu entfernen. Beendet der Benutzer das Betätigen, kehrt die Handhabe 11 aufgrund der Vorspannung des Haltemittels 11 wieder in die Ausgangsstellung zurück. Das Haltemittel nimmt schließlich also wieder die Haltestellung ein.

Die Ausgestaltung des Bearbeitungswerkzeuges 2 ist in Figur 3 offenbart. Das Bearbeitungswerkzeug 2 umfasst die Bearbeitungswirkmittel 12, die drehfest an einem Endabschnitt einer im Wesentlichen rundzylindrischen Abtriebsachse 3 angeordnet sind. Am anderen Endabschnitt der Abtriebsachse 3 ist eine Abtriebsgegenkupplung 4 realisiert. Sie ist so gestaltet, dass sie durch Formschluss in Drehung um ihre eigene Achse versetzbar ist, um auf diese Weise die Abtriebsachse 3 und somit das gesamte Bearbeitungswerkzeug 2 gleichfalls in Rotation zu versetzen. Um dies zu ermöglichen, weist in einer Aufsicht in einer Blickrichtung parallel zur Abtriebsachse 3 des Bearbeitungswerkzeuges 2 dieser Endabschnitt der Abtriebsachse 3 die Querschnittsform eines doppelt beschnittenen Kreises auf. Der Kreis ist derart doppelt beschnitten, dass die Beschneidung zwei gegenüberliegende parallele Flächen an der Umfangslinie der Abtriebsachse 3 erzeugt, hier die ebenen Seitenflächen 13 der Abtriebsachse 3. Zwischen Abtriebsgegenkupplung 4 und den Bearbeitungswirkmitteln 12 weist die Abtriebsachse 3 eine Nut 14 auf, in die das Haltemittel 10 seitens des Bearbeitungsaufsatzes 1 eingreifen kann. Sie ist der Abtriebsgegenkupplung 4 axial unmittelbar benachbart und andererseits von den Bearbeitungswirkmitteln 12 axial deutlich beabstandet. Die Nut 14 umgibt die Umfangslinie der Abtriebsachse 3 vollständig und dringt zu einer imaginären Mittelachse der Abtriebsachse 3 in eine Tiefe von etwa 5 % des Abtriebsachsenradius ein.

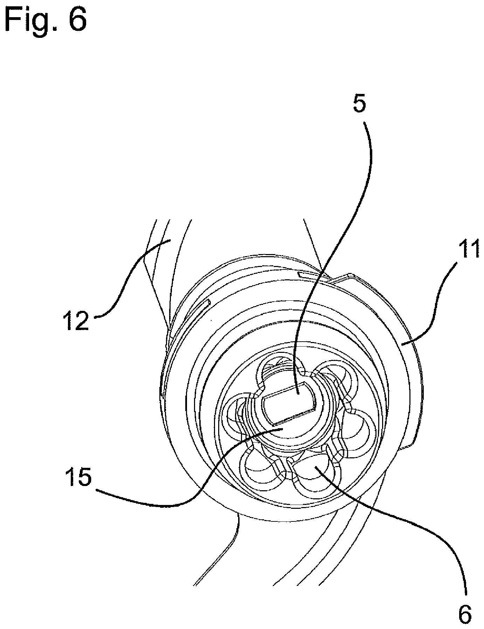

Wie bereits beschrieben und insbesondere in Figur 6 zu sehen, bilden Abtriebskupplung 5 und Antriebsgegenkupplung 6 ein gemeinsames Bauteil. Die Öffnung der Abtriebskupplung 5 zur Aufnahme der Abtriebsgegenkupplung 4 des Bearbeitungswerkzeugs 2 ist als doppelt beschnittene Kreisöffnung in einer Metallplatte 15 an der Antriebsgegenkupplung 6 gebildet und durchdringt die Metallplatte 15 vollständig, wie insbesondere auch in Figur 6 zu sehen ist. So kann ein sicherer und kräftiger Halt für das Bearbeitungswerkzeug 2 in Rotationsrichtung bereitgestellt werden, wenn das Bearbeitungswerkzeug 2 über die Abtriebskupplung 5 mit dem Bearbeitungsaufsatz 1 verbunden ist, um durch eine Kraftquelle seitens der Küchenmaschine in Rotation versetzt werden zu können.

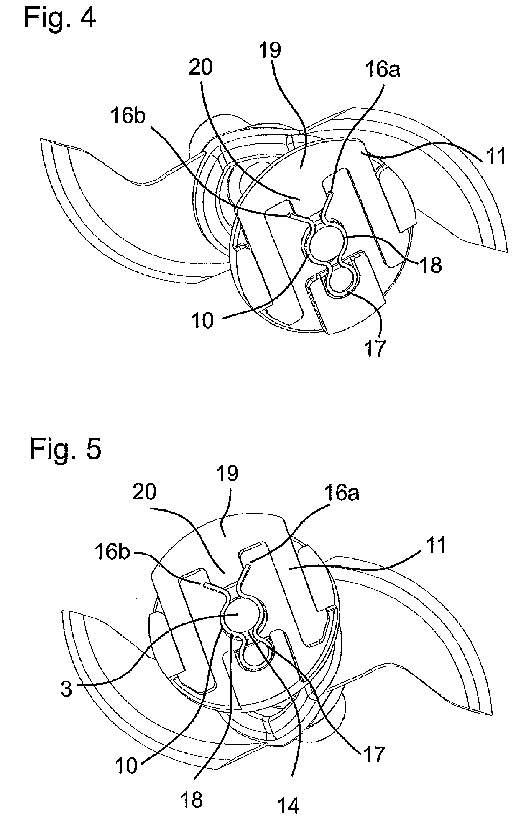

Um einen versehentlichen Verlust des Bearbeitungswerkzeugs 2 in axialer Richtung verhindern zu können, also auch senkrecht zur Rotationsebene des Bearbeitungswerkzeugs 2 einen sicheren und kräftigen Halt zu ermöglichen, ist im erfindungsgemäßen Bearbeitungsaufsatz 1 zusätzlich zur Abtriebskupplung 5 das Haltemittel 10 vorgesehen, was in den Figuren 4 und 5 besonders deutlich offenbart ist. Es ist in dem Bauteil, das die Abtriebskupplung 5 und die Antriebsgegenkupplung 4 umfasst angeordnet. Das Haltemittel 10 ist in diesem Fall ein elastisches Element, das durch einen gebogenen Draht aus Federstahl gebildet wird. Das Haltemittel 10, das zwei freie Enden 16a, 16b hat, umfasst einen ersten ringförmigen Bereich 17 und einen zweiten ringförmigen Bereich 18. Über den ersten ringförmigen Bereich 17 ist das Haltemittel 10 in dem Bauteil mit der Abtriebskupplung 5 und der Antriebsgegenkupplung 4 gehalten. An den ersten ringförmigen Bereich 18 schließt der zweite ringförmige Bereich 18 unmittelbar an. Die zwei freien Enden 16a, 16b schließen wiederum unmittelbar an den zweiten ringförmigen Bereich 18 an. Das gesamte Haltemittel 10 liegt vollständig in einer einzigen Raumebene. Die Abtriebsachse 3 des Bearbeitungswerkzeugs 2 kann durch den zweiten ringförmigen Bereich 18 hindurchgeführt werden, so dass die Abtriebsgegenkupplung 4 der Abtriebsachse 3 daraufhin in die Öffnung der Abtriebskupplung 5 hineinreicht. Daraufhin legt sich das vorgespannte Haltemittel 10 selbsttätig in die Nut der Abtriebsachse 3, so dass das Bearbeitungswerkzeug 2 an dem Bearbeitungsaufsatz 1 axial stabil festgehalten wird, bis der Benutzer durch Betätigen der Handhabe 11 das Haltemittel 10 in die Freigabestellung bewegt.

Will der Benutzer das Bearbeitungswerkzeug 2 wieder lösen, so muss er dazu die Handhabe 11 des Haltemittels 10 betätigen. Die Handhabe 11 ist als flaches Kunststoffelement ausgeführt und, wie bereits beschrieben, senkrecht zur Abtriebsachse 3 verlagerbar. In einer Aufsicht parallel zur Abtriebsachse 3 ist die Handhabe 11 im Wesentlichen u-förmig geformt. In dem Querbereich 19, der die beiden seitlichen Schenkel des Us verbindet, ist ein Vorsprung 20 ausgearbeitet, der mit den beiden freien Enden 16a, 16b des Haltemittels 10 in Kontakt steht. Betätigt der Benutzer die Handhabe 11, so drückt der Vorsprung 20 die beiden freien Enden 16a, 16b auseinander, so dass sich ihr Abstand vergrößtert. Dies ist in Figur 5 veranschaulicht. Dadurch wird auch der Durchmesser des zweiten ringförmigen Bereichs 18 des Haltemittels vergrößert, so dass das Haltemittel 10 aus der Nut 14 der Abtriebsachse 5 wieder radial herausverlagert wird. Die axiale Verrastung des Bearbeitungswerkzeuges 2 wird somit aufgehoben und der Benutzer kann das Bearbeitungswerkzeug 2 wieder leichtgängig von dem Bearbeitungsaufsatz 1 entfernen, da durch die Abtriebskupplung 5 allenfalls eine sehr schwache axiale Fixierung bewirkt wird.

Auf die beschriebene Weise können ein Bearbeitungswerkzeug 2 und ein Bearbeitungsaufsatz 1, sowie ein Set aus Bearbeitungswerkzeug 2 und Bearbeitungsaufsatz 1 bereitgestellt werden, die gegenüber dem Stand der Technik verbessert sind. Für den Benutzer kann es einfacher und komfortabler sein, ein lösbar verbindbares Bearbeitungswerkzeug 2 an einem Bearbeitungsaufsatz 1 für eine Küchenmaschine auszutauschen. Durch separate axiale und horizontale Halteeinrichtungen kann ein Optimum an Stabilität in die beiden Raumrichtungen erreicht werden. Während die Abtriebskupplung 5 für einen stabilen Halt in der Rotationsebene des Bearbeitungswerkzeugs 2 sorgen kann, insbesondere durch die Metallplatte 15, kann der gebogene Draht als Haltemittel 10 in axialer Richtung ein versehentliches Lösen des Bearbeitungswerkzeugs 2 kraftvoll verhindern. Ein absichtliches Lösen wird jedoch nicht wesentlich erschwert, denn durch die Handhabe 11, die ebenfalls Teil des Bearbeitungsaufsatzes 2 ist, kann die axiale Blockade vom Benutzer einfach und somit benutzerfreundlich aufgehoben werden. Dabei erlaubt die Anordung der Handhabe 11 und des Haltemittels 10 am Bearbeitungsaufsatz 1 einen einfachen Austausch bei Defekt. Vorteilhaft kann auch sein, dass durch die Anbringung dieser Elemente in einem Bereich, der nicht mit Nahrungsmitteln in Berührung kommt, also im Kupplungsinnenraum 7 stets ein hygienischer Umgang beim Austausch von Bearbeitungswerkzeugen 2 ermöglicht wird.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Bearbeitungsaufsatz
- 2: Bearbeitungswerkzeug
- 3: Abtriebsachse
- 4: Abtriebsgegenkupplung
- 5: Abtriebskupplung
- 6: Antriebsgegenkupplung
- 7: Kupplungsinnenraum
- 8: Bearbeitungsinnenraum
- 9: Trennwand
- 10: Haltemittel
- 11: Handhabe
- 12: Bearbeitungswirkmittel
- 13a, b: Seitenflächen
- 14: Nut
- 15: Metallplatte
- 16a, b: freie Enden
- 17: erster ringförmiger Bereich
- 18: zweiter ringförmiger Bereich
- 19: Querbereich
- 20: Vorsprung

## Patentansprüche

1. Bearbeitungsaufsatz (1) zur Nahrungsmittelbearbeitung für die Verwendung mit einer Küchenmaschine, wobei der Bearbeitungsaufsatz (1) eine oder mehrere um ihre eigene Achse rotierbare Antriebsgegenkupplungen (6), die von einer Kraftquelle antreibbar sind, umfasst, eine oder mehrere mit den Antriebsgegenkupplungen (6) wirkverbundene Abtriebskupplungen (5) aufweist, mit denen Bearbeitungswerkzeuge (2) zur Nahrungsmittelbearbeitung drehfest lösbar verbindbar sind, und
an dem Bearbeitungsaufsatz (1) für mindestens eines der Bearbeitungswerkzeuge (2) ein manuell betätigbares Haltemittel (10) vorgesehen ist, das zwischen einer Haltestellung und einer Freigabestellung bewegbar ist, um das über die Abtriebskupplung (5) mit dem Bearbeitungsaufsatz (1) lösbar verbindbare Bearbeitungswerkzeug (2) gegenüber dem Bearbeitungsaufsatz (1) entweder freigeben oder arretieren zu können, wobei
der Bearbeitungsaufsatz (1) eine Wand (9) mit einer Öffnung umfasst, wobei die Öffnung von einer Abtriebsachse (3) des mindestens einen Bearbeitungswerkzeugs (2) durchstoßen werden kann, um das mindestens eine Bearbeitungswerkzeug (2) mit der Abtriebskupplung (5) zu verbinden, **dadurch gekennzeichnet, dass** die Abtriebsachse (3) des Bearbeitungswerkzeugs (2) eine Nut (14) aufweist, in die ein Haltemittel (10) seitens des Bearbeitungsaufsatzes (1) eingreifen kann, wobei die Nut (14) auf einem Abschnitt der Abtriebsachse (3) des Bearbeitungswerkzeuges (2) angeordnet ist, der zwischen den Bearbeitungswirkmitteln (12) und der Abtriebsgegenkupplung (4) liegt.

2. Bearbeitungsaufsatz (1) nach Anspruch 1, **dadurch gekennzeichnet, dass** der Bearbeitungsaufsatz (1) ein Bechergefäß ist.

3. Bearbeitungsaufsatz (1) nach Anspruch 1 oder 2, **dadurch gekennzeichnet, dass** die Küchenmaschine eine Standküchenmaschine ist.

4. Bearbeitungsaufsatz (1) nach einem der vorhergehenden Ansprüche, **dadurch gekennzeichnet, dass** das Haltemittel (10) in die Haltestellung vorgespannt ist.

5. Bearbeitungsaufsatz (1) nach Anspruch 4, **dadurch gekennzeichnet, dass** das Haltemittel (10) eine oder mehrere Handhaben (11) aufweist, um das Haltemittel (10) manuell von der Haltestellung in die Freigabestellung verlagern zu können.

6. Bearbeitungsaufsatz (1) nach Anspruch 5, **dadurch gekennzeichnet, dass** das Haltemittel (10) durch eine Translationsbewegung der einen oder der mehreren Handhaben (11), die im Wesentlichen senkrecht zur Rotationsachse der Abtriebskupplung (5) erfolgt, in die Freigabestellung bewegt werden kann.

7. Bearbeitungsaufsatz (1) nach Anspruch 5 oder 6, **dadurch gekennzeichnet, dass** die mindestens eine Handhabe (11) in einem Abschnitt des Bearbeitungsaufsatzes (1) angeordnet ist, der von einem Abschnitt des Bearbeitungsaufsatzes (1), in dem Nahrungsmittel mit den Bearbeitungswerkzeugen (2) bearbeitet werden können, durch die Wand (9) räumlich getrennt ist.

8. Bearbeitungsaufsatz (1) nach einem der vorhergehenden Ansprüche, **dadurch gekennzeichnet, dass** an der Antriebsgegenkupplung (6) eine Kupplungsöffnung vorgesehen ist, die als Abtriebskupplung (5) dient.

9. Küchenmaschine mit einem Bearbeitungsaufsatz (1) nach Anspruch 1.

## Claims

1. Processing attachment (1) for processing foodstuffs for use with a food processor, wherein the processing attachment (1) comprises one or more drive mating couplings (6), which can rotate about their own axis and can be driven by a source of force, has one or more output couplings (5) which have an active connection to the drive mating couplings (6), to which processing tools (2) can be connected in a rotationally fixed and detachable manner for processing foodstuffs, and
a manually operable holding means (10) is provided on the processing attachment (1) for at least one of the processing tools (2), which holding means (10) is able to be moved between a holding position and a release position, in order to be able to release or lock the processing tool (2), which can be connected to the processing attachment (1) in a detachable manner via the output coupling (5), with regard to the processing attachment (1), wherein
the processing attachment (1) comprises a wall (9) with an opening, wherein the opening can be pierced through by an output axis (3) of the at least one processing tool (2), in order to connect the at least one processing tool (2) to the output coupling (5), **characterised in that** the output axis (3) of the processing tool (2) has a groove (14), into which a holding means (10) can engage on the part of the processing attachment (1), wherein
the groove (14) is arranged on a section of the output axis (3) of the processing tool (2) which lies between the processing effectors (12) and the output mating coupling (4).

2. Processing attachment (1) according to claim 1, **characterised in that** the processing attachment (1) is a beaker vessel.

3. Processing attachment (1) according to claim 1 or 2, **characterised in that** the food processor is a free-standing food processor.

4. Processing attachment (1) according to one of the preceding claims, **characterised in that** the holding means (10) is pretensioned in the holding position.

5. Processing attachment (1) according to claim 4, **characterised in that** the holding means (10) has one or more handles (11), in order to be able to manually displace the holding means (10) from the holding position into the release position.

6. Processing attachment (1) according to claim 5, **characterised in that** the holding means (10) may be moved into the release position by a translatory movement of the one or more handles (11), which takes place substantially perpendicularly with respect to the axis of rotation of the output coupling (5).

7. Processing attachment (1) according to claim 5 or 6, **characterised in that** the at least one handle (11) is arranged in a section of the processing attachment (1) which is spatially separated from a section of the processing attachment (1), in which foodstuffs are able to be processed using the processing tools (2), by the wall (9).

8. Processing attachment (1) according to one of the preceding claims, **characterised in that** a coupling opening, which acts as output coupling (5), is provided on the drive mating coupling (6).

9. Food processor with a processing attachment (1) according to claim 1.

## Revendications

1. Embout de traitement (1) destiné au traitement de produits alimentaires pour l'utilisation avec un robot culinaire, dans lequel l'embout de traitement (1) comprend un ou plusieurs couplages antagonistes d'entraînement (6) aptes à tourner autour de leur axe propre, lesquels peuvent être entraînés par une source de force, présente un ou plusieurs couplages entraînés (5) connectés de manière opérationnelle aux couplages antagonistes d'entraînement (6), couplages entraînés auxquels des outils de traitement (2) destinés au traitement de produits alimentaires peuvent être connectés de manière fixe en rotation et détachable, et
un moyen de retenue (10) actionnable manuellement est prévu au niveau de l'embout de traitement (1) pour au moins l'un des outils de traitement (2), lequel moyen de retenue est mobile entre une position de retenue et une position de libération pour pouvoir soit libérer soit arrêter l'outil de traitement (2) qui peut être connecté de manière détachable à l'embout de traitement (1) par l'intermédiaire du couplage entraîné (5) face à l'embout de traitement (1), dans lequel
l'embout de traitement (1) comprend une paroi (9) avec une ouverture, dans lequel l'ouverture peut être transpercée par un axe entraîné (3) de l'au moins un outil de traitement (2) pour connecter l'au moins un outil de traitement (2) au couplage entraîné (5), **caractérisé en ce que** l'axe entraîné (3) de l'outil de traitement (2) présente une rainure (14) dans laquelle un moyen de retenue (10) peut venir en prise du côté de l'embout de traitement (1), dans lequel
la rainure (14) est disposée sur une section de l'axe entraîné (3) de l'outil de traitement (2) qui se trouve entre les moyens opérationnels de traitement (12) et le couplage antagoniste entraîné (4).

2. Embout de traitement (1) selon la revendication 1, **caractérisé en ce que** l'embout de traitement (1) est un godet.

3. Embout de traitement (1) selon la revendication 1 ou 2, **caractérisé en ce que** le robot culinaire est un robot culinaire fixe.

4. Embout de traitement (1) selon l'une des revendications précédentes, **caractérisé en ce que** le moyen de retenue (10) est précontraint dans la position de retenue.

5. Embout de traitement (1) selon la revendication 4, **caractérisé en ce que** le moyen de retenue (10) présente un ou plusieurs éléments de préhension (11) pour pouvoir déplacer le moyen de retenue (10) manuellement de la position de retenue vers la position de libération.

6. Embout de traitement (1) selon la revendication 5, **caractérisé en ce que** le moyen de retenue (10) peut être déplacé dans la position de libération par le biais d'un mouvement de translation de l'un ou des plusieurs éléments de préhension (11) qui s'effectue pour l'essentiel perpendiculairement à l'axe de rotation du couplage entraîné (5).

7. Embout de traitement (1) selon la revendication 5 ou 6, **caractérisé en ce que** l'au moins un élément de préhension (11) est disposé dans une section de l'embout de traitement (1) qui est séparée dans l'espace par le biais de la paroi (9) d'une section de l'embout de traitement (1) dans laquelle des produits alimentaires peuvent être traités avec les outils de traitement (2).

8. Embout de traitement (1) selon l'une des revendications précédentes, **caractérisé en ce qu'**au niveau du couplage antagoniste d'entraînement (6) une ouverture de couplage est prévue qui sert de couplage entraîné (5).

9. Robot culinaire avec un embout de traitement (1) selon la revendication 1.
